# EUROPÄISCHE PATENTSCHRIFT

(11) **EP 1 795 734 B1**
(45) Veröffentlichungstag und Bekanntmachung des Hinweises auf die Patenterteilung: **05.10.2016**
(21) Anmeldenummer: 06124657.5
(22) Anmeldetag: 23.11.2006
(51) Int. Cl.: F02M 31/125, H01H 37/52, F02M 37/22, H01H 35/34

(54) **Steuerungsvorrichtung einer Heizeinrichtung**
Heating control device
Dispositif de contrôle d'un dispositif de chauffage

(30) Priorität: 09.12.2005 DE 102005058995
(43) Veröffentlichungstag der Anmeldung: 13.06.2007
(73) Patentinhaber: Mahle International GmbH, 70376 Stuttgart (DE)
(72) Erfinder: Beetz, Klaus, 76149, Karlsruhe (DE); Kissner, Gerd, 70199, Stuttgart (DE); Stange, Jörg, 70567, Stuttgart (DE); Stoll, Frank, 75223, Niefern-Öschelbronn (DE)
(74) Vertreter: BRP Renaud & Partner mbB Rechtsanwälte Patentanwälte Steuerberater

(56) Entgegenhaltungen:
- EP-A- 0 045 507
- EP-A- 1 076 350
- FR-A- 2 594 708
- JP-A- 62 121 857

## Beschreibung

Die Erfindung betrifft eine Steuerungsvorrichtung einer Heizeinrichtung. Die Erfindung betrifft außerdem eine Heizeinrichtung gemäß dem Oberbegriff des Anspruchs 9 sowie eine Dieselkraftstofffiltereinrichtung eines Verbrennungsmotors gemäß dem Oberbegriff des Anspruchs 10.

Insbesondere in der kalten Jahreszeit kann es bei Dieselkraftstoff aufgrund der geringen Temperatur zu Feststoffausscheidungen, beispielsweise in Form von Paraffin kommen, welche ein in einer Kraftstoffleitung angeordnetes Kraftstofffilter zusetzen und dadurch einen einwandfreien Betrieb desselben nicht mehr erlauben. Um dies zu verhindern, ist es beispielsweise aus der DE 37 24 410 A1 bekannt, ein Kraftstofffiltergehäuse mit einer integrierten Heizeinrichtung auszustatten.

Aus der EP 1 128 058 A2 ist eine Filtereinrichtung eines Kraftfahrzeugverbrennungsmotors mit einer ein Hauptfilter umgehenden Umgehungsleitung und einem stromauf des Hauptfilters angeordneten, den Durchfluss durch die Umgehungsleitung steuernden Überdruckventil bekannt. In der Umgehungsleitung ist ein als Notfilter dienender Zusatzfilter und eine zugeordnete Heizeinrichtung vorgesehen, welche bei Bedarf dem Kraftstoff in der Umgehungsleitung Wärme zuführt. Die Heizeinrichtung wird dabei über eine zentrale Elektronikeinrichtung, welche als Steuereinrichtung ausgebildet ist, gesteuert.

Aus der JP 62 121857 A ist eine gattungsgemäße Steuerungsvorrichtung bekannt.

Die Erfindung beschäftigt sich mit dem Problem, eine Steuerungsvorrichtung für eine Heizeinrichtung für Dieselkraftstoff anzugeben, welche insbesondere einfach und kostengünstig herstellbar ist und darüber hinaus einen zuverlässigen Betrieb eines stromab der Heizeinrichtung angeordneten Kraftstofffilters gewährleistet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, eine Steuerungsvorrichtung für eine Heizeinrichtung für Dieselkraftstoff mit zwei mechanischen Steuerungselementen auszustatten, wobei eines druckempfindlich und das andere temperaturempfindlich ist. Dies bedeutet, dass sich das eine Steuerungselement unter Druck vordefiniert verformt, während sich das andere Steuerungselement unter Temperatureinfluss einer vordefinierten Verformung unterzieht. Die beiden Steuerungselemente sind dabei miteinander zu einem Verbundteil gekoppelt, welches sich bei Überschreiten eines definierten Kraftstoffgrenzdruckes und bei gleichzeitigem Unterschreiten einer definierten Kraftstoffgrenztemperatur derart verformt, dass es die Heizeinrichtung einschaltet, während es bei Unterschreiten des Kraftstoffgrenzdruckes oder bei Überschreiten der Kraftstoffgrenztemperatur derart rückverformt, das es die Heizung ausschaltet. Zum Einschalten der Heizung sind somit zwei Bedingungen, nämlich Überschreitung des definierten Kraftstoffgrenzdruckes und die Unterschreitung der definierten Kraftstofftemperatur erforderlich, wohingegen zum Ausschalten der Heizung lediglich eine Bedingung, nämlich entweder die Unterschreitung des Kraftstoffgrenzdruckes oder die Überschreitung der Kraftstoffgrenztemperatur erfüllt werden muss. Durch die beiden mechanischen Steuerungselemente lässt sich eine kostengünstige Steuerungsvorrichtung schaffen, welche eine hohe Betriebssicherheit, insbesondere im Vergleich zu einer elektronischen Steuerungsvorrichtung, aufweist. Das Verbundteil fungiert insgesamt als ein Stellglied für einen mechanisch zu betätigenden elektrischen Schalter zur Aktivierung beziehungsweise Deaktivierung der Heizeinrichtung.

Zweckmäßig ist das temperaturempfindliche Steuerungselement als Bimetall-Membran ausgebildet. Derartige Bimetall-Membranen oder -Streifen können kostengünstig hergestellt werden und bieten eine hohe Betriebssicherheit. Darüber hinaus weisen sie einen denkbar einfachen Aufbau auf, wodurch die Robustheit der gesamten Steuerungsvorrichtung gesteigert werden kann. Aufwendige Verdrahtungen und unter Umständen störanfällige Elektronik kann dadurch vermieden werden.

Das druckempfindliche Steuerungselement ist vorteilhafterweise als eine in eine Achsrichtung vorgespannte Membran ausgebildet.

Bei einer weiteren vorteilhaften Ausführungsform der erfindungsgemäßen Lösung ist das temperaturempfindliche Steuerungselement derart ausgebildet, dass es sich oberhalb bzw. unterhalb der Kraftstoffgrenztemperatur jeweils in dieselbe Richtung wölbt, wie das druckempfindliche Steuerungselement unterhalb bzw. oberhalb des Kraftstoffgrenzdrucks und dabei einen Betätigungsstift entsprechend bewegt. Dies hat zur Folge, dass sich das temperaturempfindliche Steuerungselement unterhalb der Kraftstoffgrenztemperatur in dieselbe Richtung wölbt wie das druckempfindliche Steuerungselement oberhalb des Kraftstoffgrenzdrucks. In dieser Stellung betätigt der Betätigungsstift den elektrischen Schalter der Heizeinrichtung, d.h. er schließt einen elektrischen Kontakt, wodurch die Heizeinrichtung eingeschaltet wird. Das Steigen des Kraftstoffdrucks über den Kraftstoffgrenzdruck hinweg ist vor allem bei einem erhöhten Strömungswiderstand im Kraftstofffilter gegeben, welcher entweder durch das Ausfällen von Feststoffteilchen im Dieselkraftstoff bei geringen Temperaturen oder durch eine Verschmutzung des Filters bewirkt wird. Im ersteren Fall, das heißt beim Absinken der Kraftstofftemperatur unter die Kraftstoffgrenztemperatur wird daher die Heizeinrichtung eingeschaltet, welche den Kraftstoff erwärmt und dadurch ein Ausfällen von Feststoffpartikelchen reduziert bzw. vermindert. Ist die Kraftstofftemperatur dagegen oberhalb der Kraftstoffgrenztemperatur, so findet kein Ausscheiden von Feststoffpartikeln aus dem Kraftstoff statt, was bedeutet, dass der Druckanstieg allein auf die Verschmutzung des Kraftstofffilters zurückzuführen ist und nicht durch ein Erwärmen des Kraftstoffes, beispielsweise durch Einschalten der Heizeinrichtung, behoben werden kann. Die erfindungsgemäße Lösung bietet somit eine einfache Logik, welche zwischen unterschiedlichen Situationen, nämlich dem Druckanstieg aufgrund des verschmutzten Filters und dem Druckanstieg aufgrund des Ausfällens von Feststoffpartikeln im Kraftstoff durch Unterschreiten der Kraftstoffgrenztemperatur unterscheiden kann. Nur im letzteren Fall bewirkt die Steuerungsvorrichtung ein Einschalten der Heizeinrichtung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Dabei zeigen, jeweils schematisch
- Fig. 1: eine stark schematisierte Schnittdarstellung einer erfindungsgemäßen Steuerungsvorrichtung bei einem Kraftstoffdruck unterhalb eines vorgegebenen Kraftstoffgrenzdrucks und einer Kraftstofftemperatur oberhalb einer vorgegebenen Kraftstoffgrenztemperatur,
- Fig. 2: eine Darstellung wie in Fig. 1, jedoch bei einem Kraftstoffdruck oberhalb des Kraftstoffgrenzdrucks,
- Fig. 3: eine Darstellung wie in Fig. 1, jedoch bei einer Kraftstofftemperatur unterhalb der Kraftstoffgrenztemperatur,
- Fig. 4: eine Darstellung wie in Fig. 2, jedoch bei einer Kraftstofftemperatur unterhalb der Kraftstoffgrenztemperatur und dadurch geschlossenem elektrischen Kontakt bzw. eingeschalteter Heizeinrichtung.

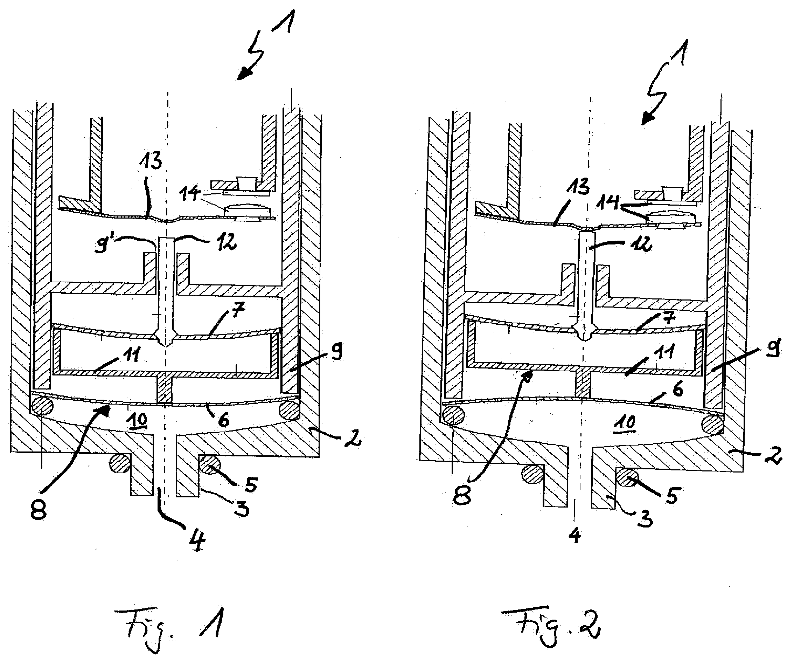

Entsprechend Fig. 1 weist eine erfindungsgemäße Steuerungsvorrichtung 1 für eine nicht dargestellte Heizeinrichtung für Dieselkraftstoff eines Verbrennungsmotors ein Gehäuse 2 auf, welches mit einem Stutzen 3 an eine nicht dargestellte Kraftstoffleitung anschließbar ist. Der Stutzen 3 weist dabei einen Kraftstoffdruckkanal 4 auf, welcher druckdicht mit der Kraftstoffleitung verbindbar ist. Eine Abdichtung kann dabei beispielsweise über eine Ringdichtung 5 erreicht werden. Im Gehäuse 2 der Steuerungsvorrichtung 1 sind zwei mechanische Steuerungselemente 6 und 7 angeordnet, wovon das Steuerungselement 6 druckempfindlich und das Steuerungselement 7 temperaturempfindlich ist. Beide Steuerungselemente 6 und 7 sind zu einem Verbundteil 8 gekoppelt. An einer Innenwand des Gehäuses 2 ist eine Führung 9 vorgesehen, welche das Verbundteil 8 einerseits führt und gleichzeitig andererseits das druckempfindliche Steuerungselement 6 fixiert.

Temperaturempfindlich heißt dabei, dass sich das Steuerungselement 7 abhängig von einem vordefinierten Grenzwert verformt. Ein derartiger Grenzwert bzw. eine Grenztemperatur kann beispielsweise 5° C sein. Druckempfindlich heißt, dass sich das Steuerungselement 6 abhängig von einem Grenzdruckwert verformt. Als Kraftstoffgrenzdruckwert kann beispielsweise 6 bar vorgesehen sein. Prinzipiell sind dabei sowohl beim temperaturempfindlichen als auch beim druckempfindlichen Steuerungselement 7, 6 zwei Stellungen möglich, wobei jeweils eine oberhalb der Grenztemperatur bzw. des Grenzdrucks und eine unterhalb der Grenztemperatur bzw. unterhalb des Grenzdrucks vorgesehen ist.

Das druckempfindliche Steuerungselement 6 steht einerseits in direktem Kontakt mit Kraftstoff 10 und andererseits mit einem das temperaturempfindliche Steuerungselemente 7 tragenden Betätigungselement 11. Das Betätigungselement 11 ist dabei ebenfalls Bestandteil des Verbundteils 8. Senkrecht zum temperaturempfindlichen Steuerungselement 7 ist gemäß Fig. 1 ein Betätigungsstift 12 vorgesehen, welcher zur Betätigung eines elektrischen Schalters 13 ausgebildet ist. Der Betätigungsstift 12 ist dabei in einer im Gehäuse 2 und an der Führung 9 angeordneten Führung 9' geführt.

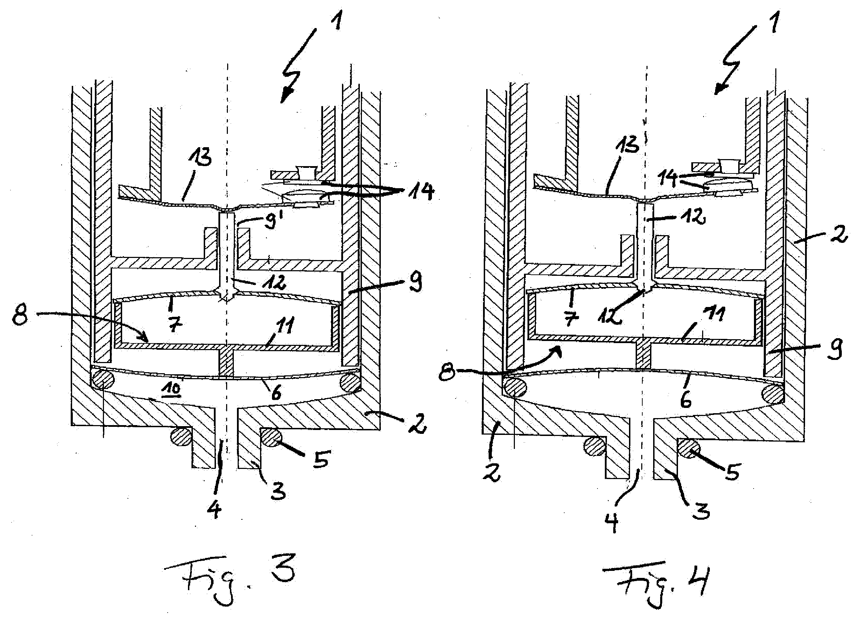

In Fig. 1 ist eine Situation dargestellt, bei der ein Kraftstoffgrenzdruck, bspw. 6 bar, noch nicht erreicht ist und dadurch das druckempfindliche Steuerungselement 6 eine Wölbung hin zum Stutzen 3 aufweist. Gleichzeitig liegt die Kraftstofftemperatur oberhalb der Kraftstoffgrenztemperatur von bspw. ca. 5° C, so dass auch das temperaturempfindliche Steuerungselement 7 eine Wölbung hin zum Stutzen 3 aufweist. Generell kann das temperaturempfindliche Steuerungselement 7 als Bimetall-Membran ausgebildet sein und bei Überschreiten bzw. Unterschreiten der Kraftstoffgrenztemperatur in eine Stellung gemäß den Fig. 3 und 4 bzw. in eine Stellung gemäß den Fig. 1 und 2 wechseln.

Der elektrische Schalter 13 ist gemäß Fig. 1 geöffnet und damit die nicht dargestellte Heizeinrichtung nicht eingeschaltet. Aufgrund des unterhalb des Kraftstoffgrenzdrucks liegenden Kraftstoffdruckes ist dabei davon auszugehen, dass ein anderenorts in der Kraftstoffleitung angeordnetes Kraftstofffilter einen entsprechenden geringen Strömungswiderstand und dadurch einen entsprechend hohen Durchsatz erlaubt. Bei einer Verstopfung bzw. Verschmutzung des Kraftstofffilters nimmt der Kraftstoffdruck innerhalb der Kraftstoffleitung zu, wobei beim Überschreiten des Kraftstoffgrenzdruckes das druckempfindliche Steuerungselement 6 gemäß der Fig. 2 in eine zum Stutzen 3 hin gewölbte Form übergeht. Diese Form bewirkt ein Verschieben des Betätigungselementes 11 in Richtung des elektrischen Schalters 13 so dass gemäß Fig. 2 der Betätigungsstift 12 beim Überschreiten des Kraftstoffgrenzdruckes an dem Schalter 13 anliegt. Der elektrische Schalter 13 ist jedoch noch geöffnet.

In den Fig. 1 und 2 ist die Kraftstofftemperatur oberhalb der Kraftstoffgrenztemperatur, so dass das temperaturempfindliche Steuerungselement 7 in beiden Darstellungen eine zum Stutzen 3 hin gewölbte Form aufweist. Sinkt nun die Kraftstofftemperatur unter die Kraftstoffgrenztemperatur, so verstellt sich das temperaturempfindliche Steuerungselement 7 gemäß den Fig. 3 und 4 in eine weg vom Stutzen 3 gewölbte Form. In Fig. 3 ist der Kraftstoffdruck unterhalb des Kraftstoffgrenzdruckes, so dass das druckempfindliche Steuerungselement 6 zum Stutzen 3 hin gewölbt ist und der elektrische Schalter 13 nicht geschlossen ist. In Fig. 4 hingegen ist die Kraftstofftemperatur unterhalb der Kraftstoffgrenztemperatur und der Kraftstoffdruck oberhalb des Kraftstoffgrenzdrucks, so dass sowohl das druckempfindliche Steuerungselement 6 als auch das temperaturempfindliche Steuerungselement 7 eine vom Stutzen 3 weg gewölbte Form aufweisen und dadurch der Betätigungsstift 12 derart gegen den elektrischen Schalter 13 gedrückt wird, dass dieser einen elektrischen Kontakt 14 schließt. Die beiden Steuerungselemente 6 und 7 sind dabei derart ausgebildet und miteinander zu dem Verbundteil 8 gekoppelt, dass das Verbundteil 8 bei Überschreiten des definierten Kraftstoffgrenzdruckes, beispielsweise 6 bar, und bei gleichzeitigem Unterschreiten der definierten Kraftstoffgrenztemperatur, beispielsweise 5°, den elektrischen Schalter 13 gemäß Fig. 4 schließen und dadurch die Heizeinrichtung einschaltet. Zum Ausschalten der Heizeinrichtung genügt jedoch bereits entweder das Unterschreiten des Kraftstoffgrenzdruckes, wie in Fig. 3 dargestellt, oder das Überschreiten der Kraftstoffgrenztemperatur wie in Fig. 2 dargestellt.

Generell soll die erfindungsgemäße Steuerungsvorrichtung 1 die Heizeinrichtung für Dieselkraftstoff eines Verbrennungsmotors derart betätigen, dass ein in der Kraftstoffleitung angeordnetes und nicht dargestelltes Kraftstofffilter möglichst zuverlässig arbeiten kann.

Im Folgenden sollen verschiedene Zustände der erfindungsgemäßen Steuerungsvorrichtung 1 anhand der Fig. 1 bis 4 kurz erläutert werden:
In Fig. 1 liegt der Kraftstoffdruck unterhalb des Kraftstoffgrenzdruckes und die Kraftstofftemperatur oberhalb der Kraftstoffgrenztemperatur, so dass sowohl das druckempfindliche Steuerungselement 6 als auch das temperaturempfindliche Steuerungselement 7 eine gewölbte Form hin zum Stutzen 3 aufweisen und dadurch der elektrische Schalter 13 geöffnet ist und die Heizeinrichtung ausgeschaltet ist. Fig. 1 stellt beispielsweise einen Zustand dar, in dem der Kraftstoff ungehindert durch das Kraftstofffilter fließt und gleichzeitig die Kraftstofftemperatur so hoch ist, dass ein Ausfällen von Feststoffteilchen, welche den Kraftstofffilter zusetzen könnten, ausgeschlossen werden kann.

In Fig. 2 ist ein Zustand dargestellt, bei dem der Strömungswiderstand im Kraftstofffilter so stark angestiegen ist, dass der Kraftstoffdruck oberhalb des Kraftstoffgrenzdruckes liegt und dadurch das druckempfindliche Steuerungselement 6 in eine vom Stutzen 3 weg gewölbte Form überführt worden ist, wogegen die Kraftstofftemperatur immer noch oberhalb der Kraftstoffgrenztemperatur liegt und dadurch das temperaturempfindliche Steuerungselement 7 eine zum Stutzen 3 hin gewölbte Form aufweist. Der Zustand nach Fig. 2 weist darauf hin, dass das Kraftstofffilter nur noch einen verminderten Strömungsquerschnitt aufweist, das heißt verschmutzt ist. Ein Einschalten der Heizeinrichtung würde in diesem Fall keine Abhilfe schaffen.

Ein ansteigender Kraftstoffdruck bzw. das Zusetzen des Kraftstofffilters kann bei sinkenden Temperaturen auch dadurch bewirkt werden, dass Feststoffteilchen aus dem Kraftstoff ausgefällt werden. Bei einer Kraftstofftemperatur, welche unterhalb der Kraftstoffgrenztemperatur liegt, ist dieser Ausfällvorgang besonders ausgeprägt, wobei durch eine Erwärmung des Kraftstoffs effektiv entgegengewirkt werden kann. Fig. 4 stellt diesen Zustand dar, wobei der Kraftstoffdruck oberhalb des Kraftstoffgrenzdrucks liegt und die Kraftstofftemperatur unterhalb der Kraftstoffgrenztemperatur. Für diesen Fall sind beiden Steuerungselemente 6 und 7 weg vom Stutzen 3 gekrümmt und drücken somit mit den Betätigungsstift 12 gegen den Schalter 13, so dass die Kontakte 14 einander berühren und die Heizeinrichtung eingeschaltet ist. Die Aufheizung des Kraftstoffs verringert die Neigung zur Ausfällung von Paraffin. Der erwärmte Kraftstoff löst bereist ausgefälltes Paraffin auf, wodurch der Strömungswiderstand im Kraftstofffilter verringert wird. Ist der Strömungswiderstand im Kraftstofffilter durch die Beheizung des Kraftstoffes derart weit abgesunken, dass der Kraftstoffdruck unterhalb des Kraftstoffgrenzdruckes liegt, so stellt sich der Zustand gemäß Fig. 3 ein. Das druckempfindliche Steuerungselement 6 weist dabei eine zum Stutzen 3 hin gekrümmte Form auf, wogegen das temperaturempfindliche Steuerungselemente 7 eine vom Stutzen 3 weg gekrümmte Form aufweist. Die Temperatur des Kraftstoffs liegt somit noch unterhalb der Kraftstoffgrenztemperatur. Trotzdem ist der Schalter 13 geöffnet und die Kontakte 14 voneinander entfernt, so dass die Heizeinrichtung ausgeschaltet ist. Fig. 3 stellt somit einen Zustand dar, welcher an einem kalten Wintertag jedoch bei durchlässigem Kraftstofffilter auftreten kann.

Generell kann das druckempfindliche Steuerungselement 6 als Schnappelement ausgebildet sein, welches bei Überschreiten des Kraftstoffgrenzdrucks plötzlich von einer ersten Endlage, wie in Fig. 1 gezeigt, in eine zweite Endlage, wie in Fig. 2 gezeigt, schnappt. Bei Unterschreiten des Kraftstoffgrenzdrucks schnappt das druckempfindliche Steuerungselement 6 von der zweiten Endlage zurück in die erste Endlage.

Gleiches gilt auch für das temperaturempfindliche Steuerungselement 7, welches ebenfalls vorzugsweise als Schnappelement ausgebildet ist und bei Unterschreiten der Kraftstoffgrenztemperatur von einer ersten Endlage, wie in Fig. 1 gezeigt, in eine zweite Endlage, wie in Fig. 4 gezeigt, schnappt, während es beim Überschreiten der Kraftstoffgrenztemperatur von der zweiten Endlage zurück in die erste Endlage schnappt. Ein Unterbrechen/Schließen eines elektrischen Stromkreises an den elektrischen Kontakten 14 erfolgt somit schlagartig, wodurch ein Abbrand an den elektrischen Kontakten 14 vermieden wird.

## Patentansprüche

1. Steuerungsvorrichtung (1) einer Heizeinrichtung für Dieselkraftstoff eines Verbrennungsmotors, wobei die Steuerungsvorrichtung (1) zwei mechanische Steuerungselemente (6, 7), nämlich ein druckempfindliches (6) und ein temperaturempfindliches (7) Steuerungselement aufweist, die derart ausgebildet und miteinander zu einem als Stellglied für einen elektrischen Betätigungs-Schalter (13) der Heizeinrichtung dienenden Verbundteil (8) gekoppelt sind, dass das Verbundteil (8) den elektrischen Schalter (13) geschlossen hält, wenn folgende beide Bedingungen gemeinsam erfüllt sind
- auf das druckempfindliche Steuerungselement (6) wirkt ein Kraftstoffdruck ein, der oberhalb eines vorgebbaren Druckgrenzwertes liegt,
- auf das temperaturempfindliche Steuerungselement (7) wirkt eine Temperatur ein, die unterhalb eines vorgebbaren Temperaturgrenzwertes liegt,
während dieser elektrische Schalter (13) geöffnet ist, wenn zumindest eine der beiden Bedingungen nicht erfüllt ist **dadurch gekennzeichnet,**
**dass** das temperaturempfindliche Steuerungselement (7) derart ausgebildet ist, dass es sich oberhalb bzw. unterhalb der Kraftstoffgrenztemperatur jeweils in dieselbe Richtung wölbt wie das druckempfindliche Steuerungselement (6) unterhalb bzw. oberhalb des Kraftstoffgrenzdrucks und dabei einen Betätigungsstift (12) entsprechend bewegt.

2. Steuerungsvorrichtung nach Anspruch 1,
**dadurch gekennzeichnet,**
**dass** das temperaturempfindliche Steuerungselement (7) als Bimetall-Membran ausgebildet ist.

3. Steuerungsvorrichtung nach Anspruch 1 oder 2,
**dadurch gekennzeichnet,**
**dass** ein Bereich des Verbundteils (8) ein offenes Ende eines Kraftstoffdruckkanals (4) verschließt.

4. Steuerungsvorrichtung nach einem der vorhergehenden Ansprüche,
**dadurch gekennzeichnet,**
**dass** das druckempfindliche Steuerungselement (6) einerseits in direktem Kontakt mit dem Kraftstoff (10) steht und andererseits mit einem, das temperaturempfindliche Steuerungselement (7) tragenden Betätigungselement (11).

5. Steuerungsvorrichtung nach Anspruch 4,
**dadurch gekennzeichnet,**
**dass** das druckempfindliche Steuerungselement (6) derart ausgebildet ist, dass es sich oberhalb des Kraftstoffgrenzdrucks hin zu dem temperaturempfindlichen Steuerungselement (7) wölbt und unterhalb des Kraftstoffgrenzdrucks weg von diesem wölbt und dabei das Betätigungselement (11) jeweils entsprechend verschiebt.

6. Steuerungsvorrichtung nach einem der Ansprüche 2 bis 5, **dadurch gekennzeichnet,**
**dass** der Betätigungsstift (12) im Wesentlichen senkrecht zur Bimetall-Membran des temperaturempfindlichen Steuerungselements (7) angeordnet ist und einen Schalter (13) zum Ein- und Ausschalten der Heizeinrichtung betätigt.

7. Steuerungsvorrichtung nach einem der vorhergehenden Ansprüche,
**dadurch gekennzeichnet,**
**dass** als Kraftstoffgrenzdruck ca. 6 bar und als Kraftstoffgrenztemperatur ca. 5 °C vorgesehen sind.

8. Steuerungsvorrichtung nach einem der vorhergehenden Ansprüche,
**dadurch gekennzeichnet,**
**dass** das druckempfindliche Steuerungselement (6) und/oder das temperaturempfindliche Steuerungselement (7) als Schnappelemente ausgebildet sind.

9. Heizeinrichtung mit einer Steuerungsvorrichtung **gekennzeichnet durch** die kennzeichnenden Merkmale nach einem der Ansprüche 1 bis 8.

10. Diesel-Kraftstofffiltereinrichtung eines Verbrennungsmotors mit einer Heizeinrichtung nach Anspruch 9.

## Claims

1. Control device (1) of a heating device for diesel fuel of a combustion engine, wherein the control device (1) has two mechanical control elements (6, 7), in particular a pressure-sensitive (6) and a temperature-sensitive (7) control element, which are formed in such a way and are coupled to each other to form a composite part (8) serving as an actuator for an electrical actuator switch (13) of the heating device in such a way that the composite part (8) holds the electrical switch (13) closed if the following two conditions are fulfilled together
- a fuel pressure acts on the pressure-sensitive control element (6), said fuel pressure lying above a predeterminable pressure limit value,
- a temperature acts on the temperature-sensitive control element (7), said temperature lying below a predeterminable temperature limit value,
whilst this electrical switch (13) is opened if at least one of the two conditions is not fulfilled,
**characterised in that**
the temperature-sensitive control element (7) is formed in such a way that, above or below the fuel limit temperature, it arches in the same direction as the pressure-sensitive control element (6) below or above the fuel limit pressure respectively, and an actuator pin (12) thereby moves accordingly.

2. Control device according to Claim 1,
**characterised in that**
the temperature-sensitive control element (7) is formed as a bimetal membrane.

3. Control device according to Claim 1 or 2,
**characterised in that**
a region of the composite part (8) seals an open end of a fuel pressure channel (4).

4. Control device according to any one of the preceding claims,
**characterised in that**
the pressure-sensitive control element (6) on the one hand is in direct contact with the fuel (10) and on the other hand with an actuating element (11) bearing the temperature-sensitive control element (7).

5. Control device according to Claim 4,
**characterised in that**
the pressure-sensitive control element (6) is formed in such a way that it arches towards the temperature-sensitive control element (7) above the fuel limit pressure and arches away from this below the fuel limit pressure, and the actuating element (11) thereby moves accordingly, respectively.

6. Control device according to any one of Claims 2 to 5,
**characterised in that**
the actuator pin (12) is arranged substantially perpendicular to the bimetal membrane of the temperature-sensitive control element (7) and actuates a switch (13) to switch the heating device on and off.

7. Control device according to any one of the preceding claims,
**characterised in that**
approx. 6 bar is provided as a fuel limit pressure and approx. 5°C is provided as a fuel limit temperature.

8. Control device according to any one of the preceding claims,
**characterised in that**
the pressure-sensitive control element (6) and/or the temperature-sensitive control element (7) are formed as snap elements.

9. Heating device having a control device **characterised by** the
characterising features according to any one of Claims 1 to 8.

10. Diesel fuel filter device of a combustion engine having a heating device according to Claim 9.

## Revendications

1. Dispositif de commande (1) d'un dispositif de chauffage pour du carburant Diesel d'un moteur à combustion interne, dans lequel le dispositif de commande (1) présente deux éléments de commande (6, 7) mécaniques, à savoir un élément de commande sensible à la pression (6) et un élément sensible à la température (7), qui sont réalisés de telle manière et sont couplés entre eux en une pièce de liaison (8) sous la forme d'un organe de réglage servant pour un commutateur (13) d'actionnement électrique du dispositif de chauffage, que la pièce de liaison (8) maintient le commutateur (13) électrique fermé lorsque les deux conditions suivantes sont remplies simultanément
- une pression de carburant, qui se situe au-dessus d'une valeur limite de pression pouvant être prédéfinie, agit sur l'élément de commande sensible à la pression (6),
- une température, qui se situe en dessous d'une valeur limite de température pouvant être prédéfinie, agit sur l'élément de commande sensible à la température (7),
tandis que ce commutateur (13) électrique est ouvert, lorsqu'au moins une des deux conditions n'est pas remplie,
**caractérisé en ce**
**que** l'élément de commande sensible à la température (7) est réalisé de telle manière qu'il est bombé au-dessus ou en dessous de la température limite du carburant chaque fois dans le même sens que l'élément de commande sensible à la pression (6) en dessous ou au-dessus de la pression limite du carburant et déplaçant ainsi un stylet d'actionnement (12) de manière correspondante.

2. Dispositif de commande selon la revendication 1,
**caractérisé en ce**
**que** l'élément de commande sensible à la température (7) est réalisé sous la forme d'une membrane bimétallique.

3. Dispositif de commande selon la revendication 1 ou 2,
**caractérisé en ce**
**qu'**une zone de la pièce de liaison (8) ferme une extrémité ouverte d'un canal de pression de carburant (4).

4. Dispositif de commande selon l'une des revendications précédentes,
**caractérisé en ce**
**que** l'élément de commande sensible à la pression (6) est d'une part en contact direct avec le carburant (10) et d'autre part avec un élément d'actionnement (11) portant l'élément de commande sensible à la température (7).

5. Dispositif de commande selon la revendication 4,
**caractérisé en ce**
**que** l'élément de commande sensible à la pression (6) est réalisé de telle manière qu'il est bombé au-dessus de la pression limite de carburant vers l'élément de commande sensible à la température (7) et qu'en dessous de la pression limite de carburant, il est bombé en s'éloignant par rapport à celui-ci, et déplaçant ainsi chaque fois l'élément d'actionnement (11) de manière correspondante.

6. Dispositif de commande selon l'une des revendications 2 à 5,
**caractérisé en ce**
**que** le stylet d'actionnement (12) est disposé sensiblement verticalement par rapport à la membrane bimétallique de l'élément de commande sensible à la température (7) et actionne un commutateur (13) pour la mise en marche et l'arrêt du dispositif de chauffage.

7. Dispositif de commande selon l'une des revendications précédentes,
**caractérisé en ce**
**qu'**en tant que pression limite de carburant, environ 6 bar, et qu'en tant que température limite de carburant, environ 5 °C, sont prévues.

8. Dispositif de commande selon l'une des revendications précédentes,
**caractérisé en ce**
**que** l'élément de commande sensible à la pression (6) et/ou l'élément de commande sensible à la température (7) sont réalisés sous la forme d'éléments enfichables.

9. Dispositif de chauffage avec un dispositif de commande **caractérisé par** les caractéristiques remarquables selon l'une des revendications 1 à 8.

10. Dispositif de filtre de carburant Diesel d'un moteur à combustion interne avec un dispositif de chauffage selon la revendication 9.
